# EUROPÄISCHE PATENTSCHRIFT

(11) **EP 0 669 888 B1**
(45) Veröffentlichungstag und Bekanntmachung des Hinweises auf die Patenterteilung: **17.07.1996**
(21) Anmeldenummer: 93924027.1
(22) Anmeldetag: 08.11.1993
(51) Int. Cl.: B64G 1/22, H01P 1/26

(54) **HOHLLEITERABSORBER**
WAVEGUIDE ABSORBER
ABSORBEUR POUR GUIDES D'ONDES

(30) Priorität: 12.11.1992 DE 4238136
(43) Veröffentlichungstag der Anmeldung: 06.09.1995
(73) Patentinhaber: ROBERT BOSCH GMBH, 70442 Stuttgart (DE)
(72) Erfinder: GEISSLER, Klaus, H., D-71522 Backnang (DE); DAMASCHKE, Jürgen, D-74078 Heilbronn (DE); WOLK, Dieter, D-73650 Winterbach (DE)
(86) Internationale Anmeldenummer: DE9301064
(87) Internationale Veröffentlichungsnummer: WO9411249

(56) Entgegenhaltungen:
- FR-A- 2 456 999
- US-A- 2 697 208
- US-A- 3 790 904
- US-A- 4 906 952
- PATENT ABSTRACTS OF JAPAN vol. 10, no. 384 (E-466)(2441) 23. Dezember 1986 & JP,A,61 173 502 (MITSUBISHI ELECTRIC CORP.) 5. August 1986
- PATENT ABSTRACTS OF JAPAN vol. 10, no. 384 (E-466)(2441) 23. December 1986 & JP,A,61 173 502 (MITSUBISHI ELECTRIC CORP.) 5. August 1986

## Beschreibung

Die vorliegende Erfindung betrifft einen Hohlleiterabsorber, der mindestens einen, in einen Hohlleiter eingesetzten, Absorbermaterial aufweisenden Körper besitzt.

In der Mikrowellentechnik werden vielfach reflexionsfreie Abschlußwiderstände und Dämpfungsglieder benötigt. Als solche werden Hohlleiterabsorber eingesetzt, wie sie z.B. aus dem "Taschenbuch der Hochfrequenztechnik", H. Meinke und F.W. Grundlach, 3. Auflage, 1968, Seiten 443 - 445 bekannt sind. Mit welchen Mitteln die im Hohlleiter angeordneten aus Absorbermaterial bestehenden Körper fixiert sind, geht aus dieser Veröffentlichung nicht hervor.

Aus der US-A-906,952 ist ein Hohlleiterabsorber bekannt, bei dem ein Absorberkörper in dem Hohlleiter mittels Klebstoff fixiert ist.

Für die Anwendung von Hohlleiterabsorbern im Raumfahrtbereich sind an die Fixierung des absorbierenden Körpers besondere Anforderungen zu stellen. Sie soll hohen mechanischen und thermischen Belastungen standhalten können. Es ist nun die Aufgabe der vorliegenden Erfindung, einen Hohlleiterabsorber der eingangs genannten Art anzugeben, der die erwähnten Anforderungen erfüllt.

Erfindungsgemäß wird diese Aufgabe durch die Merkmale des Anspruchs 1 gelöst. Vorteilhafte Weiterbildungen der Erfindung gehen aus den Unteransprüchen hervor.

Die Erfindung hat den Vorteil, daß für die Fixierung des Absorber-Körpers keine der üblichen Stoffe, wie Kleber oder Lot, verwendet werden, welche oft sehr hohem thermischen oder mechanischen Streß nicht standhalten. Zudem ist der mechanische Aufwand bei dem erfindungsgemäßen Hohlleiterabsorber sehr gering.

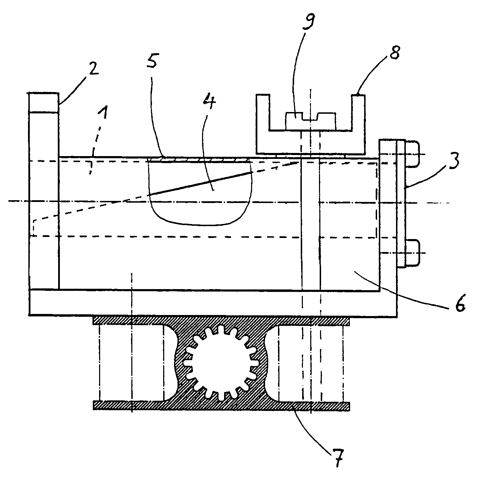

Anhand eines in der Zeichnung dargestellten Ausführungsbeispiels wird nachfolgend die Erfindung näher erläutert.

Die Figur zeigt eine Seitenansicht eines rechteckigen Hohlleiters 1, der an einem Ende mit einem Flansch 2 versehen ist und dessen anderes Ende mit einem Deckel 3 abgeschlossen ist. In diesen Hohlleiter 1 ist ein Körper 4 eingesetzt, der zumindest teilweise aus einem temperaturbeständigen Absorbermaterial (z.B. Siliziumkarbit) besteht. Der Körper 4 erstreckt sich mit einem Teilbereich über die gesamte Hohlleiterhöhe und besitzt die Form eines Keils. Der Absorber-Körper kann jede beliebig andere Form haben; sie hängt z.B. von den elektrischen Anforderungen und von der Einbaulage im Hohlleiter ab. Entscheidend ist nur, daß der Körper sich zumindest bereichsweise über die gesamte Hohlleiterhöhe (bzw. den gesamten Hohlleiterdurchmesser bei einem Rundhohlleiter) erstreckt, so daß er zwischen einander gegenüberliegenden Wandbereichen des Hohlleiters eingeklemmt werden kann.

Um den Körper 4 im Hohlleiter 1 durch Klemmen zu fixieren, ist eine Hohlleiterwand 5 zumindest in dem auf dem Körper 4 aufliegenden Bereich in seiner Dicke so stark reduziert, daß dieser Bereich flexibel ist. Übt man auf diesen flexiblen Wandbereich 5 einen Druck aus, so wird der Körper 4 gegen die gegenüberliegende starre Hohlleiterwand 6 gepreßt. Dadurch entsteht ein gut wärmeleitender Kontakt des Körpers 4 mit dieser Hohlleiterwand 6, auf deren Außenseite gemäß dem gezeichneten Ausführungsbeispiel ein Kühlsystem 7, z. B. eine Heatpipe, angeordnet ist.

Ein auf dem flexiblen Wandbereich 5 liegender Druckbügel 8 ist mittels Schrauben 9 an der gegenüberliegenden Hohlleiterwand 6 befestigt. Mit diesen Befestigungsschrauben 9 selbst kann entweder der Druckbügel 8 soweit gespannt werden, daß er den nötigen Klemmdruck auf den flexiblen Wandbereich 5 ausübt, oder es können neben den Befestigungsschrauben 9 zusätzlich Schrauben in dem Druckbügel 8 vorgesehen sein, die gegen den flexiblen Wandbereich 5 schraubbar sind.

## Patentansprüche

1. Hohlleiterabsorber, der mindestens einen in einen Hohlleiter eingesetzten, Absorbermaterial aufweisenden Körper (4) besitzt, dadurch gekennzeichnet, daß der Körper (4) zwischen Hohlleiterwänden (5, 6) dadurch eingeklemmt ist, daß mindestens ein an dem Körper (4) anliegender Wandbereich (5) flexibel ausgebildet ist und daß eine auf den flexiblen Wandbereich (5) einwirkende Kraft diesen gegen den Körper (4) preßt.

2. Hohlleiterabsorber nach Anspruch 1, dadurch gekennzeichnet, daß der flexible Wandbereich (5) durch eine entsprechend starke Reduzierung der Wanddicke realisiert ist.

3. Hohlleiterabsorber nach Anspruch 1 oder 2, dadurch gekennzeichnet, daß ein den Klemm-Druck auf den flexiblen Wandbereich (5) ausübender Druckbügel (8) vorgesehen ist, der auf den flexiblen Wandbereich (5) aufgelegt und mit einem ihm gegenüberliegenden Wandbereich (6) des Hohlleiters (1) verschraubt ist.

4. Hohlleiterabsorber nach Anspruch 3, dadurch gekennzeichnet, daß der Klemm-Druck durch eine entsprechend enge Verschraubung des Druckbügels (8) mit dem gegenüberliegenden Wandbereich (6) entsteht.

5. Hohlleiterabsorber nach Anspruch 3, dadurch gekennzeichnet, daß in dem Druckbügel (8) Schrauben angeordnet sind, die gegen den flexiblen Wandbereich (5) schraubbar sind, um den Klemm-Druck erzeugen zu können.

## Claims

1. Waveguide absorber which has at least one member (4) inserted into a waveguide and exhibiting absorber material, characterized in that the member (4) is clamped between waveguide walls (5, 6) by providing that at least one wall region (5) resting on the member (4) is constructed flexibly, and that a force acting on the flexible wall region (5) presses the latter against the member (4).

2. Waveguide absorber according to Claim 1, characterized in that the flexible wall region (5) is realized by an appropriately strong reduction in the wall thickness.

3. Waveguide absorber according to Claim 1 or 2, characterized in that provision is made of a pressure clamp (8) which exerts the clamping pressure on the flexible wall region (5), rests on the flexible wall region (5) and is screwed to a wall region (6) of the waveguide (1) which is opposite said flexible wall region.

4. Waveguide absorber according to Claim 3, characterized in that the clamping pressure is produced by a correspondingly tight screwing of the pressure clamp (8) to the opposite wall region (6).

5. Waveguide absorber according to Claim 3, characterized in that arranged in the pressure clamp (8) are screws which can be screwed against the flexible wall region (5) in order to be able to produce the clamping pressure.

## Revendications

1. Absorbeur pour guide d'onde, comportant au moins un corps (4) à matière absorbante, qui se monte dans un guide d'onde, caractérisé en ce que le corps (4) est serré entre les parois (5, 6) du guide d'onde pour qu'au moins une zone de paroi (5) appliquée contre le corps (4) soit souple et qu'une force agissant sur la zone de paroi souple (5) pousse cette paroi contre le corps (4).

2. Absorbeur pour guide d'onde selon la revendication 1, caractérisé en ce que la zone de paroi souple (5) est constituée par une réduction d'épaisseur correspondante de l'épaisseur de paroi.

3. Absorbeur pour guide d'onde selon la revendication 1 ou 2, caractérisé par un étrier de pression (8) exerçant une pression de serrage sur la zone de paroi souple (5), et qui est appliqué sur la zone de paroi souple (5) et est vissé sur une zone de paroi (6) en regard dans le guide d'onde (1).

4. Absorbeur pour guide d'onde selon la revendication 3, caractérisé en ce que la pression de pincement est réalisée par un vissage serré correspondant de l'étrier de pression (8) et de la zone de paroi (6) en regard.

5. Absorbeur pour guide d'onde selon la revendication 3, caractérisé par des vis prévues sur l'étrier de pression (8) et qui peuvent être vissées contre la zone de paroi (5) souple, pour créer la pression de serrage.
